# DEMANDE DE BREVET EUROPEEN

(11) **EP 0 679 913 A1**
(43) Date de publication de la demande: **02.11.1995**
(21) Numéro de dépôt: 95400882.7
(22) Date de dépôt: 20.04.1995
(51) Int. Cl.: G02B 6/255

(54) **Procédé de gestion de soudure à l'arc de fibres optiques**

(30) Priorité: 25.04.1994 FR 9404955
(71) Demandeur: ALCATEL CABLE INTERFACE, F-08330 Vrigne aux Bois (FR)
(72) Inventeur: Reslinger, Michel, F-91070 Bondoufle (FR); Casthelain, Daniel, F-92700 Colombes (FR); Hakoun, Roland, F-95330 Domont (FR)
(74) Mandataire: Buffiere, Michelle

(57) **Abrégé**

Le procédé de soudure à l'arc de fibres optiques comporte une première phase (PhI) de fusion et d'interpénétration des extrémités soumises à l'arc et une phase d'alignement (PhA) pour prolonger la fusion sous le contrôle du décalage calculé à partir de l'image des extrémités non éclairées extérieurement.

Il est caractérisé en ce que la première phase est une phase de gestion d'intensité de l'arc, réalisée par incréments successifs d'intensité sous le contrôle de la luminescence prise après chaque incrément par les extrémités.

La phase finale (PhH), qui est réalisée à intensité constante définie en fonction de l'intensité 12, en étant cependant limitée à la valeur Imax, et en une durée donnée pour toutes les fibres.

Cette phase finale prolonge la fusion et améliorel'alignement. Elle compense la correction d'alignement réalisée dans la phase précédente à partir du mésalignement calculé dans le seul plan d'image des extrémités.

Un tel cyle de fusion permet de s'affranchir des différentes conditions environnantes et de la nature des fibres concernées à souder.

## Description

La présente invention se rapporte au raccordement de fibres optiques, réalisé par soudure à l'arc de leurs extrémités en vis-à-vis. Cet arc est le plus souvent un arc électrique produit entre deux électrodes situées de part et d'autre des extrémités à souder et soumises à une différence de potentiel de commande à laquelle est asservi le courant de l'arc.

D'une manière générale, en tant que telle connue, une opération de soudure à l'arc de fibres optiques peut se décomposer en trois cycles principaux qui se déroulent l'un après l'autre dans le temps et sont réalisés avec une intensité et une durée de l'arc ayant souvent des valeurs prédéterminées pour chacun d'eux. Ce sont successivement :
- un cycle de nettoyage des extrémités à souder,
- un cycle de préfusion de ces extrémités, et
- un cycle de fusion proprement dite, au cours duquel les extrémités s'interpénètrent, fondent ensemble et se solidarisent.

L'article "Real time Control of Arc Fusion for Optical Fiber Splicing" de W. Zheng, publié dans la revue Journal of Lightwave Technology, vol.ll, n°4, avril 1993, décrit notamment une commande du cycle de fusion des extrémités des fibres. Cette commande est basée sur le fait que le coeur des fibres est directement rendu visible pendant la fusion. Il est alors possible dans ces conditions, par des techniques d'analyse et de traitement de l'image numérique prise, de calculer le décalage des coeurs et de commander en conséquence la durée finale de ce cycle pour que la tension superficielle créée dans les fibres au fur et à mesure de leur fusion réduise le décalage des coeurs jusqu'à une valeur de seuil prédéterminée.

Ainsi selon cet article, la séquence de commande dans le temps de ce cycle de fusion commence avec un arc de durée initiale définie et suffisamment longue, de 0,5 s environ, pour faire fondre les extrémités des fibres avec une certaine interpénétration, et d'intensité également définie et suffisamment élevée, de 15 mA environ, pour rendre les coeurs visibles. L'image des coeurs est alors prise. Elle est analysée pour calculer le décalage des coeurs, tout en maintenant l'arc mais réduisant son intensité, à une valeur de 10 mA environ, pour éviter les effets de la tension superficielle. Si ce décalage calculé est inférieur à une valeur de seuil prédéterminée la phase de fusion est considérée terminée et est arrêtée. Dans le cas contraire, elle se poursuit, avec des impulsions de durée définie et relativement courte et d'intensité reprenant la valeur initiale, de 15 mA, pour l'action de la tension superficielle des fibres sur le décalage entre les coeurs, et une nouvelle prise d'image à la fin de chaque impulsion. Ce processus est répété tant que le décalage calculé par analyse de la dernière image prise n'est pas inférieur à la valeur de seuil. Il définit ainsi une phase d'alignement des coeurs.

Une telle séquence de commande est adaptée à des fibres à souder, qui sont dites d'un même type, c'est-à-dire qui sont de nature analogue ou ont des caractéristiques thermiques analogues, en étant ainsi sensibles de manière quasi-identique à l'intensité de l'arc électrique. Ceci impose une modification de l'intensité et de la durée initiale de l'arc de fusion lorsqu'on passe d'un type à un autre type de fibres à souder, ou autant de séquences de commande dites adaptées chacune à l'un des différents types de fibres à souder.

La présente invention a pour but de permettre la gestion de la soudure à l'arc de fibres optiques, et plus particulièrement du cycle de fusion, par une commande unique pour tous les types de fibres à souder, ces fibres à souder pouvant être d'un même type quelconque ou pouvant être de type différent.

Elle a pour objet un procédé de gestion de soudure à l'arc de fibres optiques, pour un cycle de fusion de leurs extrémités en vis-à-vis, consistant :
- dans une première phase du cycle, à soumettre lesdites extrémités à un arc de fusion et à faire interpénétrer lesdites extrémités au cours de leur fusion, et
- dans une deuxième phase dudit cycle, dite phase d'alignement, à prendre au moins une image desdites extrémités non éclairées extérieurement, à calculer par analyse et traitement d'image un décalage d'alignement des extrémités sur chaque image et à prolonger la fusion à l'arc tant que le décalage calculé reste supérieur à un seuil de décalage prédéterminé,
   caractérisé en ce qu'il consiste, en outre, dans ladite première phase, dite de gestion d'intensité de l'arc de fusion, à faire évoluer l'intensité dudit arc par incréments successifs, à prendre également au moins une image des extrémités non éclairées extérieurement après chaque incrément, à calculer par analyse et traitement d'image la luminescence de chaque extrémité et à arrêter l'incrémentation et la phase de gestion d'intensité dès que la luminescence calculée de l'une des extrémités atteint une première valeur de seuil prédéterminée.

Ce procédé présente avantageusement en outre au moins l'une des caractéristiques additionnelles suivantes :
- il consiste en outre à prendre avant ledit cycle une image dite préalable des extrémités éclairées extérieurement pour définir sur chacune d'elles au moins une fenêtre d'analyse, à laquelle est attribuée une valeur de luminescence à détecter au cours dudit cycle.
- il consiste à définir deux fenêtres d'analyse à partir de l'image préalable, et à réaliser la phase de gestion d'intensité en deux séquences contrôlées par la luminescence calculée sur l'une des fenêtres de chaque extrémité et puis de celle calculée sur l'autre des fenêtres de chaque extrémité.
- il consiste à réaliser la phase d'alignement sous le contrôle d'un mésalignement latéral calculé sur chaque image des extrémités.
- il consiste à réaliser la phase d'alignement à l'intensité obtenue à la fin de la phase de gestion d'arc.
- il consiste en outre à réaliser une phase finale dite d'homogénéisation des extrémités après la phase d'alignement, exécutée à une valeur d'intensité, fonction de la valeur obtenue à la fin de la phase de gestion d'arc, mais limité à une valeur maximale.

L'invention est décrite en détail ci-après en regard d'un mode préféré de réalisation illustré à titre d'exemple dans les dessins ci-annexés.

Dans ces dessins :
- les figures 1 et 2 représentent l'organigramme de commande selon l'invention d'un cycle de fusion des extrémités de deux fibres à souder,
- les figures 3 et 4 représentent schématiquement des images de ces extrémités, l'une prise avant le cycle et l'autre prise au cours du cycle,
- la figure 5 illustre le cycle de fusion de deux fibres.

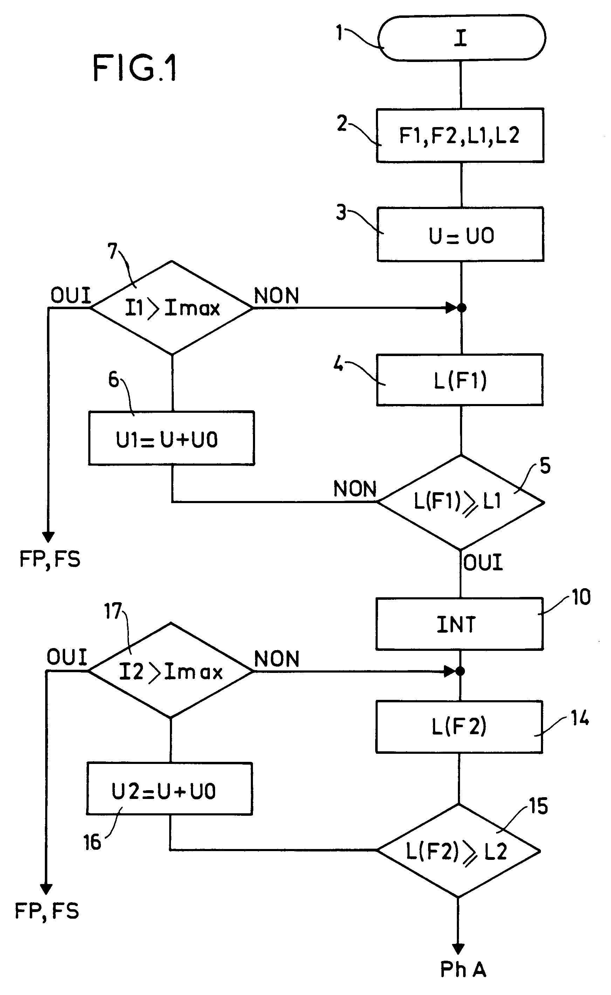

La figure 1 illustre le déroulement d'une première phase du cycle de fusion des extrémités en vis-à-vis de deux fibres à souder. Cette première phase est une phase de gestion de l'intensité de l'arc de fusion reçu par les extrémités et généré par deux électrodes situés de part et d'autre des extrémités.

Le cycle de fusion ou la première phase de ce cycle débute par une initialisation 1, notée I. Celle-ci déclenche une opération 2 de chargement de deux paramètres, qui sont dits première et deuxième fenêtres internes d'analyse de chacune des extrémités et sont notés F₁ et F₂, indépendamment de l'extrémité concernée pour des raisons de commodité, auxquels sont associées une première valeur L₁ et une deuxième valeur L2 prédéterminées et mémorisées de luminescence.

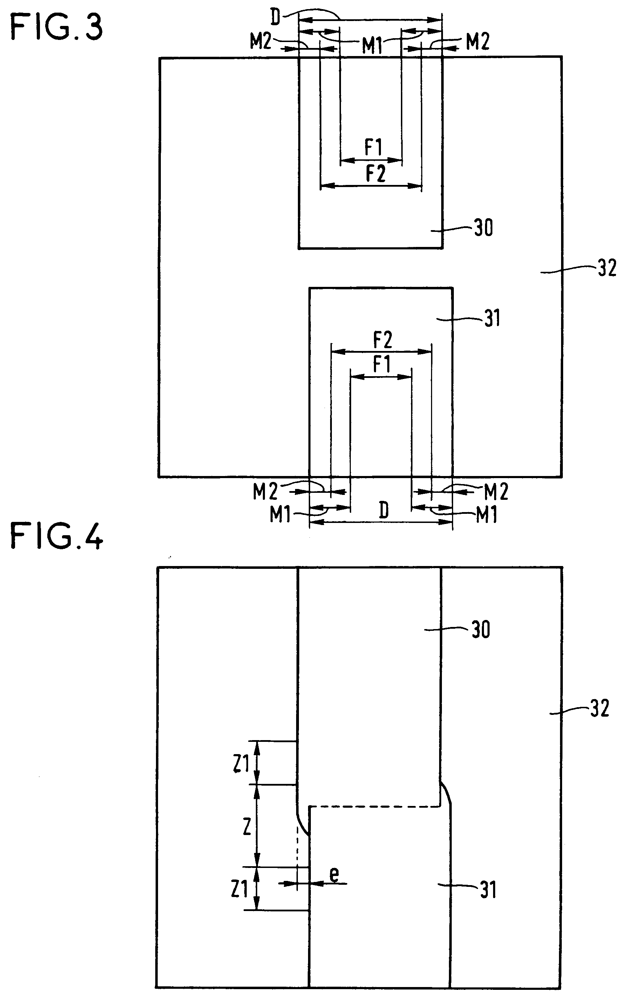

L'obtention de ces fenêtres d'analyse se fait à partir d'une image plane des deux extrémités, qui est réalisée avant le cycle de fusion à l'aide d'une source d'éclairage et d'un système vidéo de prise et d'analyse d'image et a été mémorisée. Elle est précisée ultérieurement en regard de la figure 3 donnée à cet effet.

L'opération 2 déclenche à son tour une opération 3, notée U=Uₒ, de mise des électrodes à une tension U de valeur initiale Uo, pour la génération d'un arc de fusion d'intensité I=Iₒ, de valeur nettement insuffisante pour la fusion requise, et pour assurer à partir de cette intensité initiale Iₒ la gestion de l'intensité I dans le temps.

Cette gestion de l'intensité I est assurée par incréments successifs de la tension U entre les électrodes, ces incréments ayant en particulier la même valeur Uo que la tension initiale ou en variante pouvant être différents d'elle. Elle est réalisée sous le contrôle de la luminescence que prend chaque extrémité au fur et à mesure de la fusion. Cette luminescence est nulle ou quasi nulle pour l'intensité Iₒ, puis apparaît et croît de manière différente d'une extrémité à l'autre avec la progression de la fusion et selon l'énergie captée par chacune des extrémités. Elle est évaluée par analyse et traitement de l'image des extrémités, prise par le système vidéo mais sans source d'éclairage extérieure des extrémités.

Elle est réalisée tout d'abord en une première séquence par une premier groupe d'opérations, qui sont exécutées à la suite les unes des autres selon une boucle à sortie conditionnée et qui consistent en :
- une opération 4 de prise et d'analyse d'image des deux extrémités, qui est déclenchée pour la première fois par la mise sous tension initiale Uₒ, puis après chaque incrément Uₒ de la tension U devenant successivement U₁, et qui englobe une temporisation de réponse des extrémités à la nouvelle valeur I₁ d'intensité de l'arc de fusion, au cours de laquelle est évaluée par analyse et traitement de l'image prise la luminescence L sur la fenêtre d'analyse F₁ de l'une et l'autre des extrémités, ainsi que noté L(F₁),
- une opération de comparaison 5 de la luminescence évaluée L(F₁) de chacune des extrémités avec la première valeur prédéterminée L₁, à l'issue de laquelle si la luminescence évaluée des extrémités reste inférieure à cette première valeur, on augmente la tension entre les électrodes,
- une opération 6 d'incrémentation de tension à appliquer aux électrodes, ainsi que noté U₁ =U + Uₒ,
- une opération dite de sécurité 7, consistant à comparer l'intensité I₁ de l'arc de fusion pour la nouvelle tension U₁ à appliquer, avec une intensité maximale définie Iₘₐₓ, pour commander la fin de programme FP du cycle de fusion et une signalisation d'échec de soudure FS, si l'intensité I₁ atteint Iₘₐₓ, et pour valider la nouvelle tension U₁ à appliquer et renouveler la prise et l'analyse d'image selon l'opération 4, dans le cas contraire.

Dès que la luminescence évaluée sur la fenêtre F₁ de l'une des deux extrémités atteint ladite première valeur L₁, la première séquence est terminée et l'opération de comparaison 5 assure la sortie de boucle et déclenche une opération 10 d'interpénétration des deux extrémités, qui est notée INT et réalisée par une avance de quelques microns de l'une des extrémités dans l'autre.

Cette opération 8 déclenche à son tour une deuxième séquence de gestion d'intensité réalisée par un deuxième groupe d'opérations successives, qui définissent une autre boucle analogue à celle du premier groupe et consistent en :
- une opération 14 analogue à l'opération 4, au cours de laquelle est évaluée par analyse et traitement d'image la luminescence L sur la fenêtre d'analyse F₂ de l'une et l'autre des extrémités, ainsi que noté L(F₂),
- une opération de comparaison 15 de la luminescence évaluée L(F₂) de chacune des extrémités avec la deuxième valeur prédéterminée L₂, à l'issue de laquelle si la luminescence évaluée reste inférieure à L₂ on augmente à nouveau la tension U entre les électrodes devenant U₂ pour une intensité I₂ de l'arc,
- une opération d'incrémentation 16, analogue à l'opération 6, pour laquelle la tension à appliquer prend une valeur U₂ =U + Uₒ,
- une opération de sécurité 17 analogue à l'opération 7 et bouclée sur l'opération 14 pour renouveler cette opération lorsque 14 et les suivantes, lorsque l'intensité I₂ correspondant à la nouvelle tension U₂ à appliquer reste inférieure à Imax et pour commander la fin de programme et la signalisation d'échec de soudure dans le cas contraire.

La sortie de cette boucle et fin de la phase de gestion d'intensité de l'arc sont définies à l'issue de l'opération 15, dès que la luminescence évaluée L(F₂) sur la fenêtre F₂ de l'une des extrémités atteint ladite deuxième valeur prédeterminée L₂.

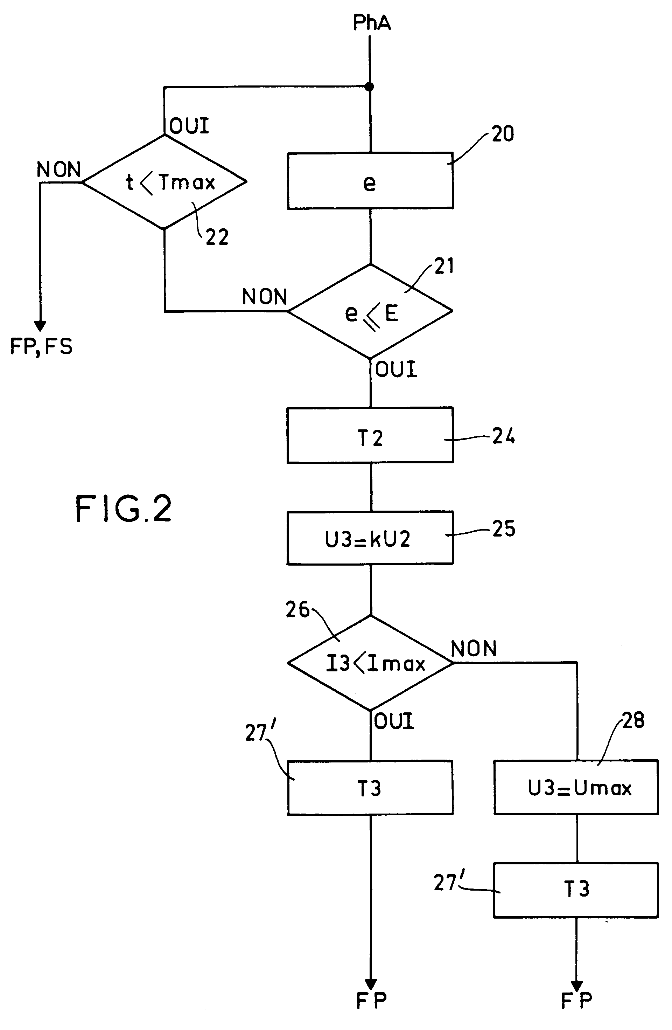

Dans ces conditions, cette opération 15 déclenche alors une deuxième phase dite d'alignement, ainsi que noté PhA sur les figures 1 et 2.

Cette phase PhA et une phase finale, dite d'homogenéisation des extrémités, du cycle de soudure sont décrites en se référant à la figure 2.

La phase d'alignement PhA est exécutée à intensité constante de l'arc de fusion, dont la valeur est celle I₂ résultant de la dernière incrémentation de la tension réalisée par l'opération 16 de la phase de gestion d'arc de la figure 1. Elle est contrôlée par un mésalignement latéral noté e des deux extrémités, qui est calculé par l'analyse et le traitement de l'image des deux extrémités ainsi que précisé en regard de la figure 4. Elle dure tant que ce mésalignement calculé e reste supérieur à seuil de mésalignement E, prédéterminé et mémorisé, sans pour autant excéder une durée maximale Tₘₐₓ, définie et également mémorisée.

Le maintien prolongé dans le temps de l'arc de fusion à cette intensité constante I₂ accentue la tension superficielle qui est créée dans les extrémités et tend normalement à réduire leur mésalignement.

La phase PhA consiste en une suite d'opérations en boucle avec une sortie conditionnelle de cette boucle. Ce sont :
- une opération 20, de prise et d'analyse d'image des extrémités, pour calculer par traitement d'image le mésalignement latéral e des extrémités, cette opération pouvant englober une temporisation préalable et prendre en compte la différence entre les diamètres des extrémités calculés avant le cycle, pour minorer le mésalignement calculé d'une quantité égale à la moitié de la valeur de cette différence,
- une opération 21 de comparaison du mésalignement calculé e avec le seuil prédéterminé E, à l'issue de laquelle si le mésalignement calculé est supérieur à E on prolonge cette phase d'alignement,
- une opération 22, de limitation de durée, comparant le temps t écoulé depuis le début de cette phase avec la durée maximale Tₘₐₓ qui lui est attribuée, à l'issue de laquelle si le temps écoulé est inférieur à cette durée maximale on valide la prolongation de la phase en renouvelant l'opération 21.

Si le temps écoulé t atteint Tₘₐₓ, on commande la fin de programme FP et la signalisation de défaut ou d'échec de soudure FS.

La sortie de boucle est définie à l'issue de l'opération 21 dès que le mésalignement calculé e est inférieur à E. Elle déclenche une opération de temporisation 24, de durée prédéterminée et mémorisée T2, qui appartient en tant que telle à la phase d'alignement puisqu'elle agit dans ce sens, ou à la phase finale PhH du cycle.

Cette phase finale est de durée prédétermiée T3 et est exécutée à une intensité I₃ de l'arc de fusion, qui est supérieure et dans un rapport k avec I₂ et est obtenue par augmentation de la tension U₂ dans le rapport k. Ce rapport est prédéterminé et mémorisé. Il résulte d'essais multiples d'expérimentation et correspond à une augmentation de 30 à 40 % de la tension U₂.

Elle consiste en :
- une opération 25 de définition de la nouvelle tension U₃ à appliquer, ainsi que noté U₃ = kU₂,
- une opération de validation 26, qui consiste à comparer l'intensité I₃ correspondant à cette tension U₃ avec l'intensité maximale Iₘₐₓ, à l'issue de laquelle si la valeur I₃ est inférieure à Iₘₐₓ la tension U₃ est appliquée aux électrodes,
- une opération 27 de temporisation pendant la durée T₃.

Si I₃ atteint la valeur Iₘₐₓ, la tension U₃ prend la valeur Uₘₐₓ correspondant à Iₘₐₓ selon l'opération 28 et est appliquée aux électrodes pendant la durée T₃ selon l'opération 27' de temporisation.

La phase finale et le cycle de fusion sont terminés à l'issue de l'opération de temporisation T₃ et commande la fin de programme FP pour le retour à zéro de la tension U entre les électrodes.

Bien entendu, les opération 25, 26 et 28 peuvent être exécutées pendant la temporisation T₂ de l'opération 24. Bien entendu également, au lieu de minorer de la quantité indiquée le mésalignement calculé e on peut majorer le seuil prédéterminé E de cette quantité.

La figure 3 illustre l'image dite préalable des extrémités en vis-à-vis mais pas tout à fait jointives des deux fibres 30 et 31 à souder, qui est prise avant le cycle de fusion par le système vidéo alors que ces extrémités sont éclairées par une source extérieure. Ce système vidéo est à caméra CCD. Il donne une image plane tramée en lignes et colonnes de haute définition dans une surface totale d'image appelée écran 32, qui permet par analyse et par traitement numérique de déterminer la position des extrémités dans l'écran et le diamètre réel D de chacune d'elles et de calculer les fenêtres d'analyse F₁ et F₂ dans l'écran et plus précisément dans chaque extrémité.

Les fenêtres d'analyse F₁ et F₂ sont définies dans ce diamètre réel D, en prenant une première et une deuxième marge intérieures M₁ et M₂ par rapport à leurs bords latéraux ou diamètre D dans ce plan.

Ces marges sont prédéterminées et mémorisées. Elles résultent d'essais d'expérimentation, pour les valeurs L₁ et L₂ de luminescence qui leur sont affectées respectivement et sont à détecter au cours du cycle de fusion.

Chacune des fenêtres F₁ et F₂ correspond donc à une longueur de segment dans l'écran, ou plus précisément dans chacune des extrémités sur l'écran.

Cette même image permet également de calculer l'écartement d entre les faces frontales des extrémités juste avant le cycle de fusion, la valeur de cet écartement d étant la valeur moyenne ou pouvant être la valeur maximale calculée.

Cet écartement d définit à une constante près l'avance de l'une des extrémités pour leur interprétation requise lorsque cette opération est déclenchée au cours du cycle de fusion.

La figure 4 schématise l'image des extrémités après la commande d'interprétation, qui est prise sans éclairage extérieur au début et au cours de la phase d'alignement pour calculer le mésalignement latéral e existant.

Ce mésalignement e est calculé d'un seul côté des extrémités sur cette image plane, en considérant deux zones latérales Z1 et Z2 de calcul qui sont de même longueur et situées de part et d'autre d'une zone englobant la zone d'interpénètration. Le choix de ces deux zones Z₁ et Z₂ permet d'éliminer les effets de bord et les effets des possibles imperfections des faces frontales alors confondues, qui peuvent apparaître dans la zone d'interpénétration et au voisinage direct de celle-ci et qui conduiraient à un mésalignement calculé non réel.

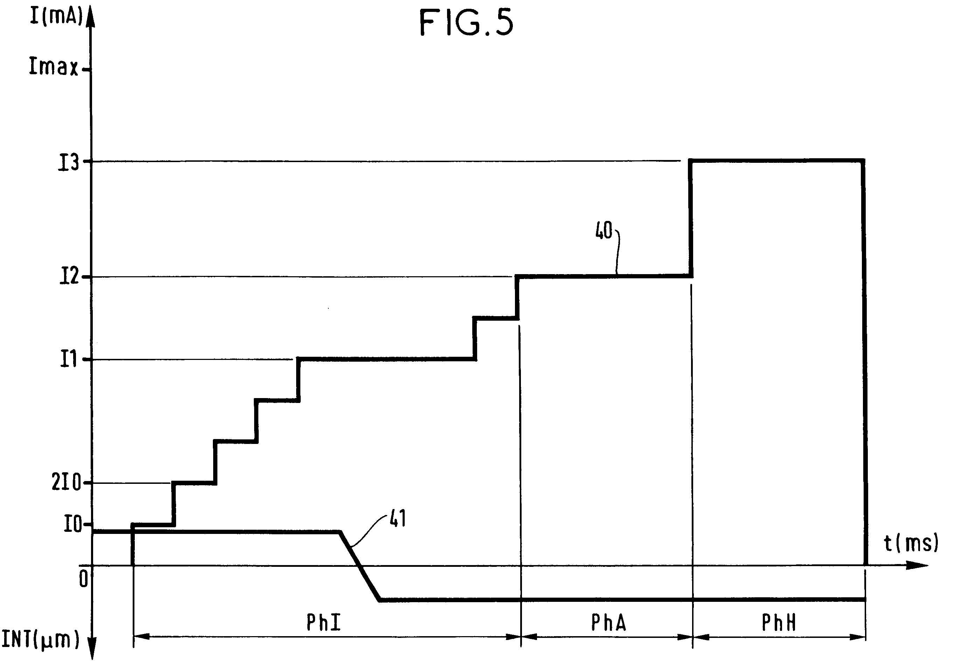

La figure 5 illustre pour deux fibres données le cycle de fusion de leurs extrémités. Elle montre dans le temps t en ms et pour ces deux fibres, la courbe 40 d'évolution de l'intensité I en mA de l'arc de fusion, et la courbe 41 d'interprétation INT en microns de ces extrémités.

En regard de ces courbes, on précise que :
- la première phase notée PhI de gestion d'intensité de l'arc est réalisée en deux temps ou séquences par incréments d'intensité Iₒ jusqu'à l'extrémité I₁ puis l'intensité I₂, ces valeurs I₁ et I₂ étant indéterminées au préalable mais correspondant à l'acquisition des luminescences L₁ et L₂ le long des fenêtres F₁ et F₂ de l'une quelconque des deux extrémités, chacun de ces deux temps étant de durée variable pour deux autres fibres et étant séparés par la commande d'interpénétration exécutée à l'intensité I₁ et en une durée donnée pour toutes les fibres,
- la phase PhA d'alignement est de durée variable pour deux autres fibres et est réalisée à l'intensité I₂ précédente maintenue constante, ceci dans une limite de durée maximale fixée,
- la phase finale PhH, qui est réalisée à intensité constante définie en fonction de l'intensité I2, en étant cependant limitée à la valeur Imax, et en une durée donnée pour toutes les fibres.

Cette phase finale prolonge la fusion et améliore l'alignement. Elle compense la correction d'alignement réalisée dans la phase précédente à partir du mésalignement calculé dans le seul plan d'image des extrémités.

Un tel cyle de fusion permet de s'affranchir des différentes conditions environnantes et de la nature des fibres concernées à souder. Sa première phase est auto-asservie pour compenser les différences de point de fusion entre les fibres à souder. Elle rend le cycle adapté à la quasi totalité des types de fibres.

## Revendications

**1)** Procédé de gestion de soudure à l'arc de fibres optiques, pour un cycle de fusion de leurs extrémités en vis-à-vis, consistant :
- dans une première phase du cycle, à soumettre lesdites extrémités à un arc de fusion et à faire interpénétrer lesdites extrémités au cours de leur fusion, et
- dans une deuxième phase dudit cycle, dite phase d'alignement, à prendre au moins une image desdites extrémités non éclairées extérieurement, à calculer par analyse et traitement d'image un décalage d'alignement des extrémités sur chaque image et à prolonger la fusion à l'arc tant que le décalage calculé reste supérieur à un seuil de décalage prédéterminé,
caractérisé en ce qu'il consiste, en outre, dans ladite première phase, dite de gestion d'intensité de l'arc de fusion, à faire évoluer l'intensité (I) dudit arc par incréments successifs (Iₒ), à prendre également au moins une image des extrémités non éclairées extérieurement après chaque incrément, à calculer par analyse et traitement d'image la luminescence (L) de chaque extrémité et à arrêter l'incrémentation et la phase de gestion d'intensité dès que la luminescence calculée (L) de l'une des extrémités atteint une première valeur de seuil prédéterminée (L₂).

**2)** Procédé selon la revendication 1, caractérisé en ce qu'il consiste en outre, d'une part avant le cycle de fusion, à prendre une image préalable desdites extrémités éclairées extérieurement, et d'autre part à calculer par analyse et traitement de l'image préalable une première fenêtre intérieure d'analyse (F₂) dans chaque extrémité et arrêter ladite phase de gestion d'intensité dès que la luminescence calculée sur la totalité de ladite première fenêtre L(F₂) atteint ladite première valeur (L2).

**3)** Procédé selon la revendication 2, caractérisé en ce qu'il consiste en outre à calculer par analyse et traitement de l'image préalable une deuxième fenêtre intérieure d'analyse (F₁) dans chaque extrémité, à exécuter ladite phase de gestion de l'intensité en une première puis une deuxième séquence d'incrémentation d'intensité, et à arrêter la première séquence dès que la luminescence calculée sur la totalité de ladite deuxième fenêtre L(F₁) de l'une des extrémités atteint une deuxième valeur prédéterminée (L₁), inférieure à la première valeur (L₂).

**4)** Procédé selon la revendication 3, caractérisé en ce qu'il consiste à réaliser ladite interpénétration desdites extrémités lors de l'arrêt de ladite première séquence, avec l'intensité de l'arc maintenue à sa valeur (I₁) à l'issue de ladite première séquence.

**5)** Procédé selon la revendication 4, caractérisé en ce qu'il consiste à exécuter ladite interpénétration en une durée limitée définie, avant ladite deuxième séquence de la phase de gestion d'intensité.

**6)** Procédé selon l'une des revendications 1 à 4 caractérisé en ce qu'il consiste en outre à limiter le courant de l'arc de fusion à une valeur d'intensité maximale définie et à interrompre ladite phase de gestion si l'intensité de l'arc atteint ladite valeur maximale.

**7)** Procédé selon l'une des revendications 2 à 5, caractérisé en ce qu'il consiste, dans ladite phase d'alignement, à calculer ledit décalage d'alignement sur l'un des bords latéraux des extrémités.

**8)** Procédé selon la revendication 7, caractérisé en ce que le décalage d'alignement latéral est minoré d'une quantité égale à la moitié de la différene entre les diamètres des extrémités, calculés par analyse et traitement de ladite image préalable et mémorisés.

**9)** Procédé selon l'une des revendications 7 et 8, caractérisé en ce qu'il consiste à réaliser ladite phase d'alignement à la valeur (I₂) d'intensité de l'arc, obtenue, à arrêt de ladite phase de gestion d'arc et maintenue constante.

**10)** Procédé selon l'une des revendications 7 à 9, caractérisé en ce que ladite phase de correction d'alignement est exécutée pendant une durée maximale limitée.

**11)** Procédé selon la revendication 7, caractérisé en ce que le décalage d'alignement latéral est calculé sur deux zones latérales Z₁ et Z₂ définies et situées de part et d'autre d'une zone dite d'interpénétration.

**12)** Procédé selon l'une des revendications 1 à 11, caractérisé en ce qu'il consiste en outre à réaliser une troisième phase dite d'homogénéisation (PhH), déclenchée à l'issue de la phase d'alignement et exécutée pendant une durée préétablie, à une troisième valeur d'intensité (I₃) de l'arc définie directement en fonction de la valeur d'intensité (I₂) obtenue à la fin de ladite phase de gestion d'intensité (PhI).

**13)** Procédé selon la revendication 12, caractérisé en ce que la troisième valeur d'intensité est supérieure de 30 à 40 % à la valeur d'intensité (I₂) à la fin de la phase de gestion d'intensité.

**14)** Procédé selon la revendication 13, caractérisé en ce que ladite troisième valeur d'intensité (I₃) est limitée à une valeur maximale (Iₘₐₓ).
